# EUROPEAN PATENT APPLICATION

(11) **EP 3 816 793 A1**
(43) Date of publication of application: **05.05.2021**
(21) Application number: 19206575.3
(22) Date of filing: 31.10.2019
(51) Int. Cl.: G06F 8/61, G06F 8/41

(54) **METHOD, SYSTEM AND EXECUTION UNIT FOR DEPLOYING SOFTWARE COMPONENTS OF A SOFTWARE**

(71) Applicant: Siemens Aktiengesellschaft, 80333 München (DE)
(72) Inventor: Götz, Jan, 91054 Buckenhof (DE); Mittermeier, Ludwig Andreas, 81541 München (DE); Müller, Harald, 82229 Seefeld-Hechendorf (DE); Premnadh, Sreenath, 82008 Unterhaching (DE)

(57) **Abstract**

The invention relates to a system for automatically acquiring the measurement data (e.g., measurements of QoS parameters) by using acquisition means (e.g., CI/CD Pipelines) while running the software components of an application in a test/monitoring stage. By doing this, the process of compiling software containers and/or deploying them on execution units can be optimized.

## Description

The invention relates to a method, system and execution unit for deploying software components of a software.

Hereafter, aspects of the invention are discussed.

According to a first aspect, the invention relates to a system comprising:
- a configuration module, wherein
   - the configuration module is configured to define and/or store environmental parameters for a source code;
- a compiling module, wherein
   - the compiling module is configured to compile the source code as one or more software containers (based on the environmental parameters,
   - execution parameters are associated with the respective software containers,
   - the respective execution parameters of a software container are determined based on the environmental parameters;
- a distribution module, wherein
   - the distribution module is configured to install the respective software containers on a respective execution unit,
   - the respective execution units are selected based on the respective execution parameters of the respective software container.

Unless stated otherwise in the following description, the terms "carry out", "calculate", "computer-aided", "compute", "determine", "generate", "configure", "reconstruct" and the like preferably relate to actions and/or processes and/or processing steps which change and/or generate data and/or convert the data into other data, wherein the data can be represented or can be present, in particular, as physical variables, for example as electrical pulses. In particular, the expression "computer" should be interpreted as broadly as possible in order to cover all electronic devices with data processing properties, in particular. Computers may therefore be, for example, personal computers, servers, handheld computer systems, pocket PC devices, mobile radio devices and other communication devices which can process data in a computer-aided manner, processors and other electronic data processing devices.

In connection with the invention, "computer-aided" can be understood as meaning, for example, an implementation of the method in which a processor, in particular, carries out at least one method step of the method.

In connection with the invention, a processor can be understood as meaning, for example, a machine or an electronic circuit. A processor may be, in particular, a main processor (Central Processing Unit, CPU), a microprocessor or a microcontroller, for example an application-specific integrated circuit or a digital signal processor, possibly in combination with a storage unit for storing program instructions, etc. A processor may also be, for example, an IC (Integrated Circuit), in particular an FPGA (Field Programmable Gate Array) or an ASIC (Application-Specific Integrated Circuit) or a DSP (Digital Signal Processor). A processor can also be understood as meaning a virtualized processor or a soft CPU. It may also be, for example, a programmable processor which is equipped with configuration steps for carrying out said method according to the invention or is configured using configuration steps in such a manner that the programmable processor implements or achieves the features according to the invention of the method, of the component, of the modules or of other aspects and partial aspects of the invention.

In connection with the invention, a "storage unit" can be understood as meaning, for example, a memory in the form of a main memory (Random-Access Memory, RAM) or a hard disk.

In connection with the invention, a "module" can be understood as meaning, for example, a processor and/or a storage unit for storing program instructions. For example, the processor is specifically set up to execute the program instructions in such a manner that the processor performs functions for implementing the method according to the invention or a step of the method according to the invention.

In connection with the invention, under "Install" can be understood as meaning, for example, to instantiate and/or deploy and/or orchestrate the respective software containers. This can, for example, be done for a specific configuration of execution units based on their configuration and/or on acquired measurement data about the execution units and/or about the execution of the respective software containers on the respective execution units.

In a first embodiment of the system, the system comprises a monitoring module, wherein the monitoring module is configured to acquire measurement data of the respective execution units, and/or the monitoring module is configured to acquire measurement data of the respective execution units, while the respective software containers are executed on the respective execution units.

In further embodiments of the system, in addition to the environmental parameters the measurement data is taken into account for compiling the respective software containers.

In further embodiments of the system, the respective execution units are selected based the respective execution parameters of the respective software container and/or based on the measurement data.

In further embodiments of the system, an anew compilation of the source code as one or more software containers is optimized based on the environmental parameters and/or the measurement data.

In further embodiments of the system, the environmental parameters and/or the execution parameters comprise the following data:
- processor requirements (e.g., multi-core processor, number of processor cores, processor architecture like RISC or CISC), and/or
- working memory requirements (e.g., overall of free RAM which needs to be available on an execution unit), and/or
- memory requirements (e.g., disc space, type of hard disk like SSD, fault tolerance like RAID 1 and/or 5), and /or
- bandwidth requirements (e.g., latency requirements are defined, bandwidth requirements like a 1 GB network connection is required), and/or
- execution time requirements (e.g., the execution unit must provide real-time capabilities for executing a software container), and/or
- execution unit requirements (e.g., the unit must have a high-end GPU or security measures to protect the software container against unallowed access).

Preferably, the environmental parameters and/or the execution parameters define requirements an execution unit should provide.

In further embodiments of the system, the measurement data comprise the following data:
- processor data (e.g., multi-core processor, number of processor cores, processor architecture like RISC or CISC), and/or
- working memory data (e.g., free RAM which is available on an execution unit), and/or
- memory data (e.g., disc space, type of hard disk like SSD, fault tolerance like RAID 1 and/or 5), and /or
- bandwidth data (e.g., current latency for transmitting/receiving data packages, currently available bandwidth), and/or
- execution time data (e.g., the execution unit is able provide real-time capabilities for executing a software container), and/or
- execution unit data (e.g., system information about the execution unit like GPU type and capabilities).

In further embodiments of the system, a production system is simulated by means of the execution units. For example, an anew compilation of the source code as one or more software containers is optimized by means of measurement data of the simulated production system and/or the measurement data and/or the environmental parameters.

In further embodiments of the system, the measurement data are determined for a respective software container executed on several execution units with different properties.

In further embodiments of the system, a productive system (which can be as well called production system) and/or a simulated a productive system is optimized based on the measurement data and/or the execution parameters of the respective software containers.

In further embodiments of the system, the measurement data are acquired for a productive system and/or a simulated a productive system.

The invention is, for example, advantageous to automatically acquire the measurement data (e.g., measurements of QoS parameters) by using acquisition means (e.g., CI/CD Pipelines) while running the software components of an application, for example, in a test/monitoring stage. For example, this improves the accuracy of the parameters, which has preferably the following benefits:
∘ It improves the performance of the applications in the field, as QoS parameters do ideally fit to the actual requirements.
∘ Operating the DAS becomes more cost efficient in the sense that you only use the infrastructure resources for running these applications as much as you need them

Furthermore, it preferably reduces the effort required in estimating, updating, and verifying these parameters.

According to a further aspect, the invention relates to an execution unit comprising:
- a receiving module, wherein
   - the receiving module is configured to receive one or more software containers,
   - for example, the respective software containers are associated with respective execution parameters;
- an execution module, wherein the execution module is configured to execute the one or more software containers;
- for example, an acquisition module, wherein
   - the acquisition module is, for example, configured to acquire measurement data about the execution unit and/or about the execution of the one or more software containers,
   - the acquisition module comprises, for example, acquisition means (e.g., sensors, e.g., CI/CD Pipeline interfaces) to acquire the measurement data;
- for example, a configuration module, wherein
   - the configuration module is, for example, configured to optimize the execution of the one or more software containers based on measurement data and/or based on the execution parameters, and/or
   - the configuration module is, for example, configured to configure the execution unit and/or the execution module for executing the one or more software containers based on measurement data and/or based on the execution parameters.

According to a further aspect, the invention relates to a computer-implemented method comprising the steps:
- define and/or store environmental parameters for a source code;
- compile the source code as one or more software containers based on the environmental parameters, wherein
   - execution parameters are associated with the respective software containers,
   - the respective execution parameters of a software container are determined based on the environmental parameters;
- install the respective software containers on a respective execution unit, wherein the respective execution units are selected based on the respective execution parameters (of the respective software container.

In further embodiments of the computer implemented method, the method comprises further method steps or features in order to implement the functional features of the system or other features of the system or its embodiments.

According to a further aspect, the invention relates to a computer-implemented method comprising the steps:
- receive one or more software containers;
- execute the one or more software containers.

In further embodiments of the computer implemented method, the method comprises further method steps or features in order to implement the functional features of the execution unit or other features of the execution unit or its embodiments.

Additionally, a variant of the computer program product having program instructions for configuring a creation device, for example a 3D printer or a similar device, is claimed, wherein the creation device is configured with the program instructions such that the cited system and/or execution unit according to the invention is created.

Furthermore, a provision apparatus for storing and/or providing the computer program product is claimed. The provision apparatus is a data storage medium that stores and/or provides the computer program product, for example. Alternatively and/or additionally, the provision apparatus is a network service, a computer system, a server system, particularly a distributed computer system, a cloud-based computer system and/or a virtual computer system that stores and/or provides the computer program product preferably in the form of a data stream, for example.

This provision is effected as a download in the form of a program data block and/or instruction data block, preferably as a file, particularly as a download file, or a data stream, particularly as a download data stream, of the complete computer program product, for example. This provision can alternatively be effected as a partial download that consists of multiple parts and is downloaded particularly via a peer-to-peer network or provided as a data stream, for example. Such a computer program product is read in, for example using the provision apparatus in the form of the data storage medium, in a system and executes the program instructions, so that the method according to the invention is executed on a computer, or configures the creation device such that it creates cited system and/or execution unit according to the invention.

The properties, features and advantages of this invention that are described above and the manner in which they are achieved will become clearer and more distinctly comprehensible in conjunction with the description of the exemplary embodiments that follows, these being explained in more detail in conjunction with the figures, in which, in a schematic depiction:
- fig. 1: illustrates an exemplary embodiment of the invention;
- fig. 2: shows a flowchart for a further exemplary embodiment of the invention;
- fig. 3: shows a flowchart for a further exemplary embodiment of the invention;

In the figures, functionally identical elements are pro-vided with the same reference numerals, unless stated otherwise. Unless stated otherwise or already stated, the following exemplary embodiments have at least one processor and / or a memory unit in order to implement or execute the method or features of the invention. Especially each apparatus mentioned in context of the invention can, for example, comprise at least one processer.

A skilled person with knowledge of the method claim / method claims or apparatus claim(s) knows of course all usual possibilities for the realization of products or implementation for these aspects of the invention, so in particular it is an independent disclosure in the description is not required. Consequently, these implementation variants are, for example, usual and are known by the skilled person in light of this document. The implementation can, for example, be implemented exclusively by hardware (components) or exclusively by software (components).

Alternatively and/or additionally, the person skilled in the art can, within the scope of his expert knowledge, select any possible inventive combinations of hardware (components) and software (components) in order to implement implementation variants according to the invention.

An inventive combination of hardware (components) and software (components) according to the invention can, for example, be realized, if a part of the effects and/or ad-vantages related to the invention are, for example, be exclusively achieved by a special hardware (e.g., a processor in the form of an ASIC or FPGA) and/or if another part of the effects and/or advantages related to the invention are (exclusively) achieved by another part, e. g., a (processor-based and/or memory-based) software.

Preferably, in view of the high number of different possibilities of implementing the invention it is not impossible and for the understanding of the invention not expedient or necessary to disclose all these implementation variants. In this respect, the following exemplary embodiments are in-tended merely to illustrate some possibilities to implement the teaching according to the invention.
Consequently, the features of the individual embodiments are preferably not limited to the respective exemplary embodiment but relate in particular to the invention in general. Accordingly, features of an exemplary embodiment can preferably also serve as features for another exemplary embodiment, in particular without explicitly mentioning this in the respective exemplary embodiment.

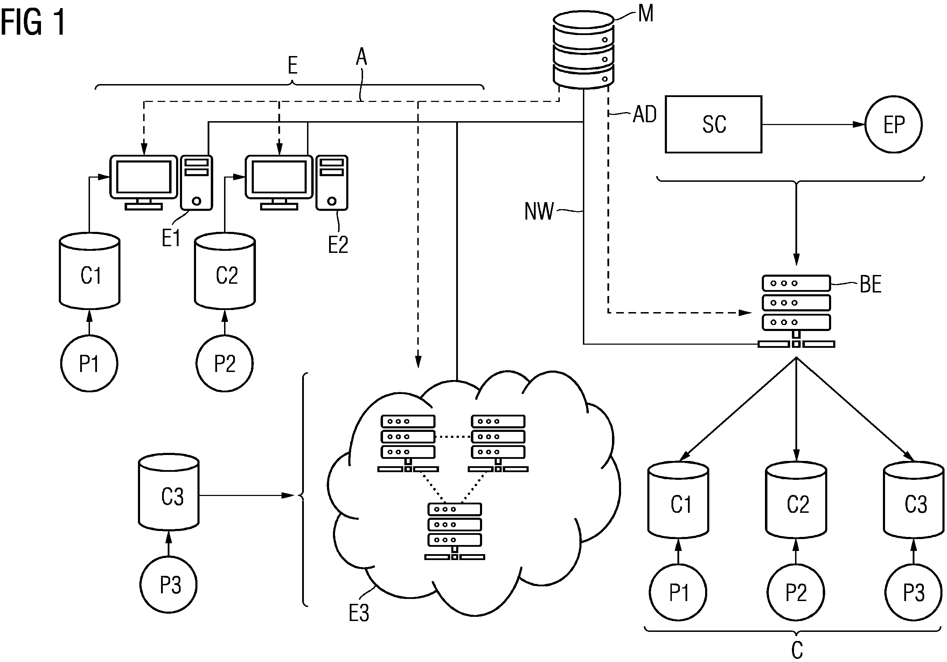

Fig. 1 shows an exemplary embodiment of the invention.

In detail, Fig. 1 shows an inventive system. The system comprises a configuration module, a compiling module BE, a monitoring module M and a distribution module, which are communicatively connected to one another via communication infrastructure NW (e. g., a network infrastructure and/or communication bus) .

The configuration module is configured to define and/or store environmental parameters EP for a source code SC.

The compiling module BE is configured to compile the source code SC as one or more software containers C (which can, for example, be called as well software components C) of an application based on the environmental parameters EP, wherein execution parameters P1, P2, P3 are associated with the respective software containers C. The respective execution parameters P1, P2, P3 of a respective software container C are determined based on the environmental parameters EP. The software container C can, for example, be software components for controlling an actuator C1, for controlling a gas turbine C2 or for executing a trained AI C3, wherein the trained AI C3 optimizes, for example, the control process for controlling the actuator or the gas turbine.

Preferably, a software container is an executable program like a program implemented by means of executable machine code, by one or more runtime objects or by executable bytecode.

Preferably, the execution parameters P1, P2, P3 are the relevant parts (or parameters) of the environmental parameters EP of the software containers C. For example, for compiling the software containers C the source code SC is split into source code modules which are compiled as the software containers C. In other words, the execution parameters can, for example, be software container specific environmental parameters.

The distribution module is configured to install the respective software containers C1, C2, C3 on one or more respective execution units E (e.g., edge devices E1, E2 and/or a cloud E3 or a virtual device in a cloud E3). The respective execution units E1, E2, E3 are selected based on the respective execution parameters P1, P2, P3 of the respective software container C1, C2, C3. The edge devices can, for example, be field devices, manufacturing devices or control devices for infrastructures (e.g., in buildings or civil infrastructure).

The monitoring module M is configured to acquire measurement data AD of the respective execution units E1, E2, E3, and/or the monitoring module M is configured to acquire measurement data AD of the respective execution units E1, E2, E3, while the respective software containers C1, C2, C3 are executed on the respective execution units E1, E2, E3. Alternatively or additionally, the respective execution units E1, E2, E3 can be selected based on the measured data and/or properties (e.g., execution unit data) of the respective execution units (e. g., installed processor, GPU etc.)
In a variant the respective execution parameters P1, P2, P3 of a respective software container C are determined based on the environmental parameters EP and/or based on test results (e. g., acquired by the monitoring module and stored in the measurement data AD) and/or results of a statistical analysis (e. g., acquired by the monitoring module and stored in the measurement data AD) and/or the measurement data AD. This can, for example, be implemented, if initially the execution parameters P1, P2, P3 are determined based on the environmental parameters EP and then the measurement data AD is acquired in a test run, for example, for specific tests (e. g., to conduct a statistical analysis). In a second step, the execution parameters P1, P2, P3 are updated based on the measurement data AD and the software containers are created and installed in an optimized manner.

In further embodiments, based on the measurement data AD the compilation process can be optimized. Here, in a first step, the software containers C1, C2, C3 are compiled based in the environmental parameters EP. While the respective software containers C1, C2, C3 are executed on the respective execution units E1, E2, E3, the measurement data AD is acquired. In a second step, the software containers C1, C2, C3 are compiled anew, where the environmental parameters EP and the measurement data AD are used to optimize the build process. For example, it is optimized which part of the source code SC is put in which software container (e. g., which part of the source code is transferred in which source code module). In other words, based on the environmental parameter's EP and the measurement data AD the compiling module can, for example, determine the target software container for functions and/or features of the source code SC.

Additionally or alternatively, in the second step the installation process of the respective software containers C1, C2, C3 on the respective execution units E1, E2, E3 are optimized. Based on the environmental parameter's EP and the measurement data AD the distribution module can decide which execution unit E1, E2, E3 is suited best for executing a respective software container C1, C2, C3.

A respective execution unit E can, for example, comprise a receiving module, an execution module, an optional acquisition module and an optional configuration module, which can, for example, be communicatively couples by a communication bus.

The receiving module is configured to receive one or more of the software containers C, wherein, for example, the respective software containers C are associated with the respective execution parameters.

The execution module is configured to execute the one or more software containers C.

The acquisition module is, for example, configured to acquire the measurement data AD about the execution unit E and/or about the execution of the one or more software containers C.

The configuration module is, for example, be configured to optimize the execution of the one or more software containers C based on measurement data AD and/or based on the execution parameters P1, P2, P3. Alternatively or additionality, the configuration module is configured to configure the execution unit E and/or the execution module for executing the one or more software containers C based on measurement data AD and/or based on the execution parameters C.

The embodiment of Fig. 1 illustrates that on each execution unit E only one software container C is executed. For example, the software container C1 is executed on the execution unit E1, the software container C2 is executed on the execution unit E2 and the software container C3 is executed on the execution unit E3. This is a simplified illustration of the invention. Other combinations are very well possible. For example, the software container C1 and the software container C2 are executed on the execution unit E1 or the software container C2 and the software container C3 are executed on the execution unit E3.

Especially after the optimization by using the measurement data AD the configuration which software container C is installed on which execution unit E can change. For example, initially the configuration depicted in Fig. 1 is used. For example, after the optimization the software container C2 and the software container C3 are executed on execution unit E3, for example, due to memory requirements.

The acquisition of the measurement data AD by the monitoring module can, for example, be implemented by using DevOps pipelines. DevOps pipelines are a ubiquitous feature of modern software engineering in the IT world. Using this, an automated build environment can, for example, be implemented to automatically compile, build, run and test their software before deploying to production.

For example, the system can be used to deploy the final product (e.g., the application with the respective software containers C1, C2, C3) to production servers.

In other words, with the inventive system a developer can develop a new application, wherein the application can, for example, be a distributed automation system (DAS). The distributed automation system can, for example, comprise a set of automation functions (AF) running together either on the same or, for example, on a cluster of Programmable Logic Controllers (PLC) communicating amongst themselves and which can be treated as a single system. An automation function can, for example, be an automation application running on a Programmable Logic Controller (PLC). The developer can, for example, transmit the source code SC to the compiling module (e.g., a source code repository like Git).

Furthermore, the environmental parameters EP can be used to store initial QoS requirements which at the bare minimum should be met by the application components (e.g., the software containers C) during runtime. This can, for example, be something like minimum CPU or RAM requirements, network bandwidth etc. If initial parameters are not specified, default values are used for deploying the application with the respective software containers C to the execution units E (e. g., a test environment) by means of the distribution module.

For example, the compiling module (e. g, the DevOps pipeline configured in Git) starts up and builds the source code SC. In the process it packages, for example, the applications into easily deployable executables like software containers C. Preferably, the application is now composed of one or more software containers C with well-defined interfaces using which it can talk to other containers of the application (e.g. an DAS). More particularly, these software containers C can then be deployed by means of the distribution module (e. g. by using a Container Orchestrator like Kubernetes) for testing.

For example, the distribution module provides an API layer which can be used to install or deploy the respective software containers C on the respective execution units E. Preferably, the Pipeline also communicates the minimum requirements to the API which is used to deploy the application the first time in a monitoring environment, where the initial environmental parameters (e.g., QoS requirements are met like where there is enough compute power, memory and network bandwidth to safely run the respective software container C). In other words, the monitoring module M can, for example, be implemented by means of that API.

The monitoring module M and/or the execution units E are, for example, be configured with monitoring tools which can measure and monitor the performance and runtime behavior of the various running containers the respective software containers C, e. g. of a DAS. Doing this allows the acquisition of the measurement data AD. For example, the tools detect various metrics related to the application, like CPU and RAM utilization, communication pattern and bandwidth requirements, etc. Preferably, this information is stored in the measurement data AD. For example, this measurement data AD is fed into an analyzer (program) of the compiling module BE, which takes the measurement data AD and derives, for example, optimized settings for compiling the respective software containers C and/or deploying/installing the respective software containers C on respective execution units E. This can, for example, be done by optimizing the environmental parameters EP (e.g., the QoS parameters) and/or the execution parameters P1, P2, P3 based on the measurement data AD. Preferably, the environmental parameters are stored as metadata of the application (e.g., the DAS)) and/or the respective software containers C. Alternatively or additionally, the execution parameters P1, P2, P3, are stored as metadata of the application (e.g., the DAS) and/or the respective software containers C. For example, the analyzer can be a part of the compiling module and/or the distribution module and/or the monitoring module and/or being implemented a separate analyzing module.

For example, after optimizing the compilation process or the installation process, the optimized environmental parameters and/or the optimized execution parameters and/or the execution parameters P1, P2, P3 and/or the environmental parameters EP and/or measurement data AD are used to deploy the application in the production environment and operate it, for example, by the pipeline.

Furthermore, the system and/or one or more modules of the system and/or the respective execution units may additionally comprise a further component or a plurality of further components or a combination of the components illustrated in this paragraph. These components can, for example, be a further processor, a memory unit, further communication interfaces (e.g., Ethernet, WLAN, USB, fieldbus, PCI), an input device (e.g., a computer keyboard or a computer mouse) and a display device (e.g., a monitor). For example, the processor can comprise a plurality of further processors (e.g., multi-core processors, hyper threading, partial reconfiguration pf an FPGA), which can be used preferably for implementing further exemplary embodiments or parts there-of.

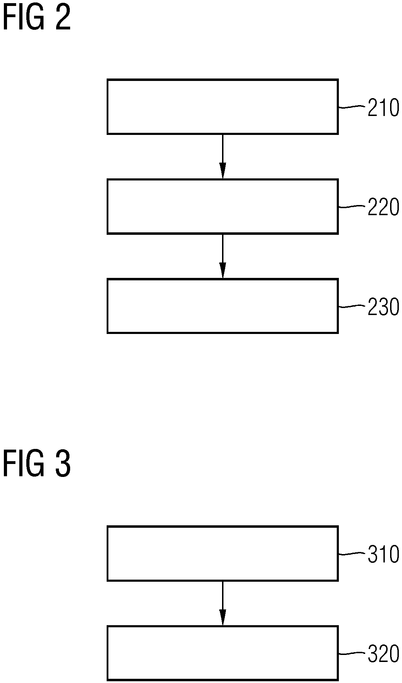

Fig. 2 shows a flowchart for an exemplary embodiment of the invention. In detail, Fig. 2 shows a flowchart of a computer implemented method for installing software contains.

The computer implemented method comprises a first method step for defining 210 and/or storing environmental parameters EP for a source code.

The computer implemented method comprises a second method step for compiling 220 the source code as one or more software containers based on the environmental parameters EP, wherein execution parameters are associated with the respective software containers and the respective execution parameters (of a software container) are determined based on the environmental parameters.

The computer implemented method comprises a third method step for installing 230 the respective software containers (on a respective execution unit, wherein the respective execution units are selected based on the respective execution parameters of the respective software container.

Preferably, the steps of the computer implemented method are executed by a processor, which is preferably specifically configured to execute these steps.

Fig. 3 shows a flowchart for an exemplary embodiment of the invention. In detail, Fig. 3 shows a flowchart of a computer implemented method for executing one or more software containers on an execution unit.

The computer implemented method comprises a first method step for receiving 310 one or more software containers.

The computer implemented method comprises a second method step for executing 320 the one or more software containers.

Preferably, the steps of the computer implemented method are executed by a processor, which is preferably specifically configured to execute these steps.

Although the invention has been illustrated and de-scribed in detail by the embodiments, the invention is not limited by the disclosed examples, and other variations can be derived by those skilled in the art without departing from the scope of the invention.

## Claims

1. System comprising:
- a configuration module, wherein
- the configuration module is configured to define and/or store environmental parameters (EP) for a source code (SC);
- a compiling module (BE), wherein
- the compiling module (BE) is configured to compile the source code (SC) as one or more software containers (C1, C2, C3) based on the environmental parameters (EP),
- execution parameters (P1, P2, P3) are associated with the respective software containers (C1, C2, C3),
- the respective execution parameters (P1, P2, P3) of a software container (C1, C2, C3) are determined based on the environmental parameters (EP);
- a distribution module, wherein
- the distribution module is configured to install the respective software containers (C1, C2, C3) on a respective execution unit (E1, E2, E3),
- the respective execution units (E1, E2, E3) are selected based on the respective execution parameters (P1, P2, P3) of the respective software container (C1, C2, C3).

2. System as claimed in claim 1, wherein
- the System comprises a monitoring module (M),
- the monitoring module (M) is configured to acquire measurement data (AD) of the respective execution units (E1, E2, E3), and/or
- the monitoring module (M) is configured to acquire measurement data (AD) of the respective execution units (E1, E2, E3), while the respective software containers (C1, C2, C3) are executed on the respective execution units (E1, E2, E3).

3. System as claimed in claim 1 or 2, wherein
- in addition to the environmental parameters (EP) the measurement data (AD) is taken into account for compiling the respective software containers (C1, C2, C3).

4. System as claimed in claim 2 or 3, wherein
- the respective execution units (E1, E2, E3) are selected based the respective execution parameters (P1, P2, P3) of the respective software container (C1, C2, C3) and/or based on the measurement data (AD) .

5. System as claimed in one of the preceding claims, wherein
- an anew compilation of the source code (SC) as one or more software containers (C1, C2, C3) is optimized based on the environmental parameters (EP) and/or the measurement data (AD).

6. System as claimed in one of the preceding claims, wherein
- the environmental parameters (EP) and/or the execution parameters (P1, P2, P3) comprise the following data:
- processor requirements, and/or
- working memory requirements, and/or
- memory requirements, and/or
- bandwidth requirements, and/or
- execution time requirements, and/or
- execution unit requirements.

7. System as claimed in one of the preceding claims, wherein
- the measurement data (AD) comprise the following data:
- processor data, and/or
- working memory data, and/or
- memory data, and /or
- bandwidth data, and/or
- execution time data, and/or
- execution unit data.

8. System as claimed in one of the preceding claims, wherein
- a production system is simulated by means of the execution units (E1, E2, E3),
- for example, an anew compilation of the source code (SC) as one or more software containers (C1, C2, C3) is optimized by means of measurement data of the simulated production system and/or the measurement data (AD) and/or the environmental parameters (EP).

9. System as claimed in one of the preceding claims, wherein
- the measurement data (AD) are determined for a respective software container (C1, C2, C3) executed on several execution units (E1, E2, E3) with different properties.

10. System as claimed in one of the preceding claims, wherein
- a productive system and/or a simulated a productive system is configured based on the measurement data (AD) and/or the execution parameters (P1, P2, P3) of the respective software containers (C1, C2, C3).

11. System as claimed in one of the preceding claims, wherein
- a productive system and/or a simulated a productive system is optimized based on the measurement data (AD) and/or the execution parameters (P1, P2, P3) of the respective software containers (C1, C2, C3).

12. System as claimed in one of the preceding claims, wherein
- the measurement data (AD) are acquired for a productive system and/or a simulated a productive system.

13. Execution unit (E1, E2, E3) comprising:
- a receiving module, wherein
- the receiving module is configured to receive one or more software containers (C1, C2, C3),
- for example, the respective software containers (C1, C2, C3) are associated with respective execution parameters (P1, P2, P3);
- an execution module, wherein the execution module is configured to execute the one or more software containers (C1, C2, C3);
- for example, an acquisition module, wherein
- the acquisition module is, for example, configured to acquire measurement data (AD) about the execution unit (E1, E2, E3) and/or about the execution of the one or more software containers (C1, C2, C3) ;
- for example, a configuration module, wherein
- the configuration module is, for example, configured to optimize the execution of the one or more software containers (C1, C2, C3) based on measurement data (AD) and/or based on the execution parameters (P1, P2, P3), and/or
- the configuration module is, for example, configured to configure the execution unit (E1, E2, E3) and/or the execution module for executing the one or more software containers (C1, C2, C3) based on measurement data (AD) and/or based on the execution parameters (P1, P2, P3).

14. Computer-implemented method for installing software contains C1, C2, C3 comprising the steps:
- define (210) and/or store environmental parameters (EP) for a source code (SC);
- compile (220) the source code (SC) as one or more software containers (C1, C2, C3) based on the environmental parameters (EP), wherein
∘ execution parameters (P1, P2, P3) are associated with the respective software containers (C1, C2, C3),
∘ the respective execution parameters (P1, P2, P 3) of a software container (C1, C2, C3) are determined based on the environmental parameters (EP) ;
- install (230) the respective software containers (C1, C2, C3) on a respective execution unit (E1, E2, E3), wherein the respective execution units (E1, E2, E3) are selected based on the respective execution parameters (P1, P2, P3) of the respective software container (C1, C2, C3).

15. Computer-implemented method for executing one or more software containers C1, C2, C3 on an execution unit E1, E2, E3 comprising the steps:
- receive (310) one or more software containers (C1, C2, C3) ;
- execute (320) the one or more software containers (C1, C2, C3).

16. A computer program product comprising instructions which, when the program is executed by a computer, cause the computer to carry out the steps of the method of claim 14 and/or claim 15.

17. Provision apparatus for the computer program product according to Claim 16, wherein the provision apparatus stores and/or provides the computer program product.
